# EUROPEAN PATENT APPLICATION

(11) **EP 4 574 568 A1**
(43) Date of publication of application: **25.06.2025**
(21) Application number: 23219594.1
(22) Date of filing: 22.12.2023
(51) Int. Cl.: B60P 1/16, E02F 9/22, E02F 9/26

(54) **A HYDRAULIC ARRANGEMENT FOR A WORKING EQUIPMENT, AND A METHOD OF USING THE ARRANGEMENT**

(71) Applicant: Hiab AB, 215 32 Malmö (SE)
(72) Inventor: NYSTRÖM, Mikko, 21290 Rusko (FI); SIRÉN, Pasi, 21610 Kirjala (FI)
(74) Representative: Bjerkén Hynell KB

(57) **Abstract**

A hydraulic arrangement (2) for a working equipment (4) with a movable arm (6) for loading and unloading an object (8), the arrangement (2) comprises a double-acting hydraulic cylinder (10) arranged to actuate a movement of the movable arm (6) to load and/or unload the object (8) with the working equipment (4), a hydraulic liquid supply system (12) configured to provide the flow of hydraulic liquid to and from the double-acting cylinder (10) supplied from a reservoir (14) of hydraulic liquid by a hydraulic pump (16), a control unit (18) configured to control the movements of the movable arm (6) by generating control signals (20), and a regenerative hydraulic circuit (24) arranged to hydraulically connect, by controlling, by said control unit (18), a regenerative valve member (26), a first chamber with a second chamber of the double-acting hydraulic cylinder (10), thereby operating said double-acting hydraulic cylinder (10) in a regenerative state, and hydraulically separate the first chamber from the second chamber, thereby operating said double-acting hydraulic cylinder (10) in a non-regenerative state. The hydraulic arrangement (2) further comprises a sensor system (28) configured to sense and provide sensor values (29) applicable to determine whether said double-acting hydraulic cylinder (10) can be operated in a regenerative state, wherein said control unit (18) is configured to operate the double-acting hydraulic cylinder (10) in the regenerative state provided that the determined sensor values indicate that requirements for regenerative state operation are fulfilled, and if any of said requirements not are fulfilled, to operate the double-acting hydraulic cylinder (10) in the non-regenerative state..

## Description

### Technical field

The present disclosure relates to a hydraulic arrangement for a working equipment, e.g. a hooklift, comprising one or two double-acting hydraulic cylinder(s) arranged to actuate a movement of a movable arm of the working equipment to load and/or unload a load carrying object using the working equipment, and particularly that the hydraulic arrangement is provided with a regenerative functionality.

### Background

The present disclosure relates to a working equipment that are widely used in a field of transportation for quickly and easily transport and position objects such as in particular load carrying objects, e.g. containers and flatracks. The working equipment, e.g. a hooklift, or other mobile machines such truck-mounted cranes, or loader cranes, or other mobile working equipment with a movable arm for load handling, is capable of preforming several work tasks, such as loading, unloading, tipping and lowering the load carrying objects. In particular, the present disclosure relates to a working equipment provided with a hydraulic arrangement provided with so-called regenerative functions.

Regenerative functions have been applied for hooklifts, e.g. to achieve a fast-speed functionality for parts of a loading/unloading procedure, by manually activating that function. Particularly, fast-speed functionality is a feature that can be ordered separately and is a regenerative function which allows for much greater (extending) speed of the main cylinders in the hooklift. Fast-speed is most often activated by the operator (by e.g. pressing a fast-speed button) when he/she requires more unloading/tipping speed, but at the same time also energy consumption is reduced. There are further other regenerative functions for hooklifts as well such a fast lowering function in tipping applications.

Regeneration is a general term that describes what happens when exhausting hydraulic fluid from the rod side, or the piston side, of an actuator is directed back into the supply line for the actuator. The exhausting fluid is reused or regenerated to do work.

In the following, some documents will be identified and briefly discussed, that disclose related technology. These documents disclose hydraulic systems comprising a hydraulic cylinder, a regenerative circuit and a control unit for controlling the hydraulic cylinder.

EP2570301B1 discloses a hydraulic system that includes a double-acting differential cylinder with a rod side chamber and a bottom side chamber as well as a hydraulic circuit that connects the two chambers. In order to facilitate the flow of hydraulic fluid from the bottom side chamber into the rod side chamber, the hydraulic arrangement also includes a flow control valve that is used to control flow of hydraulic liquid to the hydraulic cylinder and a regenerative valve to control the degree of the regenerative connectivity between the bottom side chamber and the rod side chamber of the cylinder.

US2021207344A1 discloses a hydraulic system for increasing a speed of a boom of a construction machine, wherein the system comprises a main control valve, a regeneration device and a regeneration valve unit to control the flow rate of hydraulic oil flowing through a hydraulic regeneration line. The system further comprises a control unit configured to control the main control valve, the regeneration device, and the regeneration valve unit according to a manipulation signal transmitted by a manipulation unit. EP3822118A1 discloses a hooklift arrangement for loading/unloading objects onto a vehicle. The arrangement comprises a movable arm, at least one hydraulic double-acting cylinder attached to the movable arm, a control system and a sensor system. The control system is configured to receive a position signal from the sensor system indicating the position of the movable arm, and based on the signal, put the cylinder into either an active operation mode or a passive operation mode.

US10301793B2 discloses a hydraulic drive system for a work machine which comprises a recovery circuit wherein the system comprises a plurality of hydraulic actuators, a recovery control valve and control valves to control the flow of hydraulic fluid to the hydraulic actuator and keeping the boom at a target speed. The system further comprises a control unit for controlling the control valves and the recovery control valves.

The object of the present invention is to achieve an improved hydraulic arrangement comprising one or two double-acting hydraulic cylinder(s) for a working equipment with a movable arm. The improvement lies in that it provides a more versatile application and improved controllability of the hydraulic arrangement, resulting in, for example, decreased energy consumption, a higher speed of operation, and a wider operative speed range, when providing movement to the movable arm of the working equipment.

### Summary

The above-mentioned objects are achieved by the present invention according to the independent claims.

Preferred embodiments are set forth in the dependent claims.

According to the invention, the regenerative functionality is generally applied by the hydraulic arrangement, as a means to improve the controllability, by allowing the arrangement itself determine when to apply the regenerative functionality, i.e. to maximize the time it is active. Thereby the energy consumption will be decreased. In some embodiments, a wider operative speed range will also be achieved.

An advantage achieved by embodiments of the present invention, is that it would be possible to control the hooklift proportionally over an entire, and thus wider, speed range 0 - 100%. In an application used today, a proportional control extends over only a "normal speed", being 0 - 25%, with a sudden jump from 25% to 100% when activating a fast-speed functionality by activating a regenerative function. The sudden deceleration when deactivating fast speed functionality results in a speed drop from 100% to 25% which exposes the hooklift for unnecessary mechanical stress.

Thus, an advantage achieved by the hydraulic arrangement according to the present invention is that a smoother operation resulting in less mechanical stress of the working equipment is achieved.

By applying the regenerative functionality when it is possible from a technical and/or safety point of view, without the need of activation from the operator, an energy efficient operation may be provided when possible to apply, and when the operator generates commands for higher speeds of the movement, the assembly according to the invention may provide a seamless transition to enable high speeds of movements of the movable arm.

### Brief description of the drawings

Figure 1 is a schematic illustration of a vehicle provided with a working equipment being a hooklift, where the hydraulic arrangement disclosed herein is applied.
Figure 2 is a schematic illustration of a vehicle provided with a working equipment being a hooklift in a tipping application, where the hydraulic arrangement disclosed herein is applied.
Figure 3 is a block diagram schematically illustrating the hydraulic arrangement provided with one hydraulic double-acting cylinder.
Figure 4 is a block diagram schematically illustrating the hydraulic arrangement provided with two hydraulic double-acting cylinders.
Figure 5 is a method of using the hydraulic arrangement disclosed herein.
Figure 6 is a graph illustrating a prior art movement procedure of a working equipment.
Figure 7 is a graph illustrating a movement procedure of a working equipment applying the hydraulic arrangement according to the present invention.

### Detailed description

The hydraulic arrangement, and the method of using the hydraulic arrangement, will now be described in detail with references to the appended figures. Throughout the figures the same, or similar, items have the same reference signs. Moreover, the items and the figures are not necessarily to scale, emphasis instead being placed upon illustrating the principles of the invention.

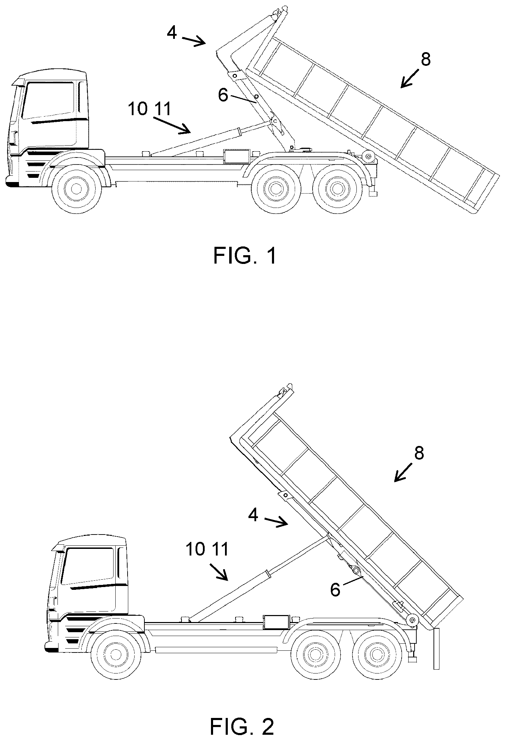

Figure 1 shows a vehicle provided with a working equipment being a hooklift, where the hydraulic arrangement disclosed herein is applied, and figure 2 shows a vehicle provided with a working equipment being a hooklift in a tipping application, where the hydraulic arrangement disclosed herein is applied.

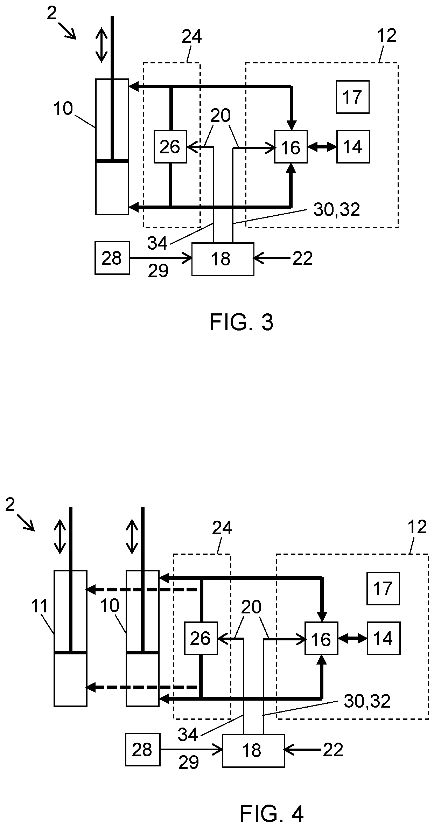

With references to the block diagrams shown in figures 3 and 4, and also to figures 1 and 2, the present invention relates to a hydraulic arrangement 2 for a working equipment 4, e.g. a hooklift (see figure 1), or a crane, mounted e.g. on a loader vehicle, such as a truck for load handling, with a movable arm 6 for loading and unloading an object 8. The object may be a load carrying object such as a container, or a flatrack.

According to one variation of the present invention schematically illustrated in figure 3, the arrangement 2, comprises one double-acting hydraulic cylinder 10 having a first and a second chamber separated by a piston attached to a rod arranged to actuate a movement of the movable arm 6 to load and/or unload the object 8 with the working equipment 4. The movement is indicated in figure 3 as a double-arrow.

According to another variation to the present invention, schematically illustrated in figure 3, two double-acting hydraulic cylinders 10, 11, a first hydraulic cylinder 10, and a second hydraulic cylinder 11, are arranged in parallel, e.g. for applying movements to a movable arm of a hooklift.

The functionality of these two variations are similar, and the description are therefore applicable two both variations except where specifically indicated.

The hydraulic arrangement further comprises a hydraulic liquid supply system 12 configured to provide the flow of hydraulic liquid to and from the double-acting cylinder 10, or to and from the two double acting cylinders 10, 11, supplied from a reservoir 14 of hydraulic liquid. The hydraulic liquid supply system 12 comprises a hydraulic reservoir 14, a hydraulic pump 16, a system of hydraulic valves 17. A control unit 18 is configured to control the movements of the movable arm 6 by generating control signals 20 to the hydraulic liquid supply system 12 in response to received operation commands 22. The control signals 20 may more specifically be applied to the hydraulic pump 16, and/or the system of hydraulic valves 17. The system of hydraulic valves comprises hydraulic control valves such as directional control valves and/or pressure control valves and/or flow control valves, the system may of course also comprise a combination of control valves such as previously mentioned.

The operation commands 22 may be manually generated by an operator via an input device (not shown) being e.g. a handheld input device that wirelessly communicates with the control unit 18. The hydraulic liquid supply system 12 may naturally be provided with one or more reservoirs for hydraulic liquid, one or more hydraulic pumps, of different types, such as, for example, fixed displacement pumps or variable displacement pumps, several hydraulic liquid pipes, and a plurality of hydraulic valves, such as, for example, control valves and other types of hydraulic valves not shown in the figure. In figures 3 and 4, the liquid pipes are schematically shown as bold lines and arrows.

Furthermore, with references to figure 3, the arrangement comprises a regenerative hydraulic circuit 24 arranged to hydraulically connect, by controlling, by said control unit 18, a regenerative valve member 26, the first chamber with the second chamber, thereby operating the double-acting hydraulic cylinder 10 in a regenerative state, i.e. the regenerative valve member 26 is at least partially open, and hydraulically separate the first chamber from the second chamber, thereby operating the double-acting hydraulic cylinder 10 in a non-regenerative state, i.e. the regenerative valve member 26 is closed.

With references to figure 4, showing the variation provided with two hydraulic double-acting cylinders 10, 11, the arrangement comprises a regenerative hydraulic circuit 24 arranged to hydraulically connect, by controlling, by said control unit 18, a regenerative valve member 26, the first chamber with the second chamber of the first hydraulic cylinder 10, or the first or the second chamber of the first hydraulic cylinder 10 with the second or first chamber, respectively, of the second double-acting hydraulic cylinder 11, thereby operating said double-acting hydraulic cylinders 10, 11 in a regenerative state. The regenerative hydraulic circuit 24 is also arranged to hydraulically and hydraulically separate said chambers, thereby operating the double-acting hydraulic cylinders 10, 11 in a non-regenerative state, i.e. the regenerative valve member 26 is closed. In figure 4, the hydraulic liquid supplied to the second hydraulic cylinder 11 is indicated by bold, dashed lines.

The hydraulic arrangement 2 further comprises a sensor system 28 configured to sense and provide sensor values 29 applicable to determine whether the double-acting hydraulic cylinder 10, or the two double-acting hydraulic cylinders 10, 11, can be operated in a regenerative state. The control unit 18 is configured to operate the double-acting hydraulic cylinder 10, or the two double-acting hydraulic cylinders 10, 11, in the regenerative state provided that the determined sensor values 29 indicate that requirements for regenerative state operation are fulfilled, and if any of the requirements not are fulfilled, the control unit 18 is configured to operate the double-acting hydraulic cylinder 10, or the two double-acting hydraulic cylinders 10, 11, in the non-regenerative state.

In an embodiment, the sensor system 28 may comprise one or many of a pressure sensor arranged at the hydraulic cylinder(s), a strain gauge sensor, an angle sensor arranged at the movable arm 6, a position sensor monitoring the position of the movable arm, or a rod, piston or other movable part of the double-acting cylinder(s), a proximity switch arranged at the moveable arm, an image or video detection system based on cameras or other image sensor devices to monitor the position of the moveable arm, a timer arranged to monitor the time consumed during a movement with the movable arm 6. The timer may e.g. be used to estimate the progress of a predefined loading or unloading sequence with the moveable arm. Sensor values from a pressure sensor at the hydraulic cylinder(s) may be used to estimate the load force that is applied to the cylinder during the loading or unloading movement, there are further other types of sensors that may form part of the sensor system to estimate the load force and one example of this is a strain gauge sensor.

According to an embodiment, which is applicable to a situation when the control unit 18 is about to switch between regenerative state operation and non-regenerative state operation, and vice versa, the control unit 18 is configured to determine if a change of flow, or pressure, of hydraulic liquid to be supplied to the double-acting cylinder, or to the two double-acting cylinders, is required. If a change of flow, or pressure, is determined to be required, the control unit 18 is configured to generate a hydraulic liquid control signal 30 to the hydraulic liquid supply system 12 to increase or decrease the flow, or the pressure, of hydraulic liquid supplied to the double-acting hydraulic cylinder(s) 10, 11, such that the movement speed of the movable arm 6 is essentially the same before and after the switch of state operation.

Thereby is achieved a smooth transition with regard to movement speed of the movable arm when switching between regenerative and non-regenerative state operation, which is mechanically beneficial for the operation of the working equipment.

In a further embodiment, the control unit 18 is configured to generate, in response to received operation commands, a first control signal 32 to control the hydraulic liquid supply system 12 and a second control signal 34 to control the regenerative valve member 26.

According to another embodiment, which is applicable when the double-acting hydraulic cylinder 10, or the two double-acting cylinders 10, 11, is/are operated in a regenerative state and the regenerative valve member 26 is fully open, the control unit 18 is configured to perform a continuous speed increase/decrease control of the movement of the movable arm 6 over the entire speed range of the movable arm 6 by the first control signal 32 applied to the hydraulic liquid supply system 12.

According to still another embodiment, applicable during regenerative state operation, the control unit 18 is configured to evaluate the available hydraulic liquid flow that may be supplied from the hydraulic liquid supply system 12, and to release hydraulic liquid flow to other hydraulic actuators of the working equipment 4 in dependence of the result of the evaluation. The hydraulic pump of the hydraulic system has a limited available maximum hydraulic liquid flow available. By implementing this embodiment, when the hydraulic arrangement is operated in the regenerative state, the hydraulic arrangement will benefit of that less hydraulic liquid is required, which results in that it is possible to release available hydraulic liquid flow for other hydraulic actuators of the working equipment.

According to another embodiment, the control unit 18 is provided with a set of rules for the decision-making regarding switching between regenerative and non-regenerative state operation.

Examples of rules, in the set of rules:
- If the force acting on the cylinder(s), e.g. as a result of the object being loaded or unloaded, is below a predetermined threshold, apply regenerative state. There are further versions of this rule that may be applied, depending on the sensors available in the sensor system, it may be based on the force but also on a measured pressure at the cylinder(s) or a sensor reading from a strain gauge, as an alternative example.
- If angle of movable arm is larger/smaller than preset angle, apply non-regenerative state.
- If angle of movable arm is within predetermined angle-interval, apply regenerative state.
- If the position of the movable arm is within a first predetermined range or space with reference to the vehicle it is mounted to, apply non-regenerative state.
- If the position of the movable arm is outside a first predetermined range or space with reference to the vehicle it is mounted to, apply regenerative state.
- If the position of the movable arm is within a second predetermined range or space with reference to the vehicle it is mounted to, apply regenerative state.
- If the position of the movable arm is within a third predetermined range or space with reference to the vehicle it is mounted to, apply non-regenerative state.
- If the movable arm has reached a first predefined part of predetermined movement sequence for loading and/or unloading, apply regenerative state.
- If the movable arm has not reached a first predefined part of predetermined movement sequence for loading and/or unloading, apply non-regenerative state.
- If a first predefined time period has lapsed since a movement sequence for loading and/or unloading has started, apply regenerative state.
- If a second predefined time period has lapsed since a movement sequence for loading and/or unloading has started, apply non-regenerative state.
- If the weight of load to be loaded/unloaded is higher than a predetermined weight limit, apply non-regenerative state.
- Nearly fully extended hydraulic cylinder(s), apply non-regenerative state. This rule may be applied to protect the cylinder(s) and ensure that it/they is/are operated in a safe way. Alternatively, the regenerative state could be kept also near the fully extended position and the speed of movement may instead be limited or restricted when the control unit 18 is generating control signals to the hydraulic liquid supply system 12.

The rules are applied to determine, by the control unit 18, when the cylinder(s) can be operated in regenerative state from what is technically feasible and also from a safety point of view. The regenerative state is the preferred state to operate in, if it is possible to do so from a technical and safety perspective as it provides an energy efficient operation of the working equipment or extends the speed span for the movement of the movable arm.

What may be a concern on the technical side, and what may limit the operation in the regenerative state from a system perspective of the hydraulic arrangement according to the invention, is however the possibility to regulate the speed of movement of the moveable arm with high enough precision for safe operation. By specifying and applying a set of rules for the decision-making regarding switching between regenerative and non-regenerative state operation this may be adapted to the specifics of the system (geometries, types of valves and/or pumps, the applications, the object to be loaded and unloaded etc) and controlled by the control unit 18.

The rules may be configured and adapted as part of the installation and configuration of the working equipment to which the hydraulic arrangement according to the invention is applied.

According to a still further embodiment, during one movement procedure of the moveable arm 6, the control unit 18 is configured to perform numerous switches between regenerative and non-regenerative state operation.

Preferably, the regenerative valve member 26 is an on-off valve. If an on-off valve is applied for the regenerative function, in order to achieve a smooth increase/decrease of movement speed, the hydraulic pump may be controlled to increase/decrease flow or pressure to avoid stepwise changes of the movement speed, when going from regenerative state to non-regenerative state and vice versa. Applying a change in the control signals to the hydraulic pump is one way of adapting the movement speed through generating control signals for the hydraulic liquid supply system 12. Further, control signals to the control valves of the hydraulic liquid supply system 12 may be applied separately or in combination to achieve this.

In another embodiment, the regenerative valve member 26 is a proportional valve which allows the degree of the regenerative connectivity to be adjusted in multiple steps or continuously.

The present invention also relates to a working equipment 4, e.g. a hooklift, that may be mounted on a vehicle, and comprising at least one hydraulic arrangement 2, provided with one or two hydraulic cylinders 10, 11, as described above.

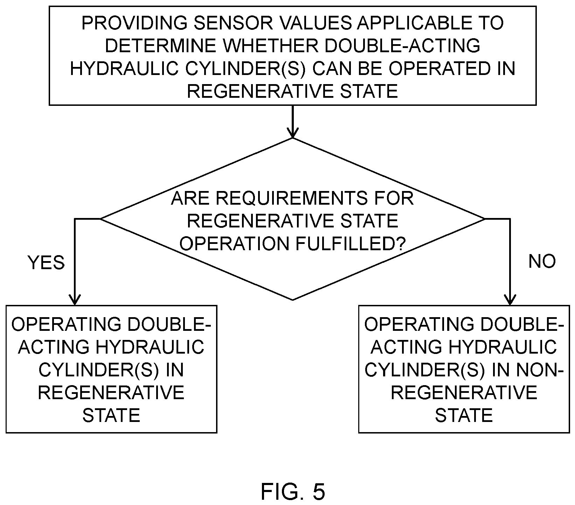

The present invention also relates to a method of using a hydraulic arrangement as defined above. The hydraulic arrangement, and different embodiments of the arrangement, have been described in detail above and it is herein referred to that description. The method will now be described with references to the flow diagram shown in figure 5.

The method comprises providing sensor values 29, obtained and sensed by a sensor system 28, applicable to determine whether the double-acting hydraulic cylinder 10, or the two double-acting cylinders 10, 11, can be operated in a regenerative state. Depending on the result of the determination, the method comprises either operating the double-acting hydraulic cylinder(s) 10, 11 in the regenerative state provided that the determined sensor values 29 indicate that requirements for regenerative state operation are fulfilled, or operating the double-acting hydraulic cylinder 10, 11 in the non-regenerative state, if any of said requirements not are fulfilled.

In the following, some embodiments of the method are listed. These have the same technical features and advantages as for the corresponding features of the hydraulic arrangement described above. Consequently, these technical features and advantages are not repeated or explained anew in order to avoid unnecessary repetition.

According an embodiment, the method comprises, when the control unit 18 is about to switch between regenerative state operation and non-regenerative state operation, and vice versa, determining if a change of flow, or pressure, of hydraulic liquid to be supplied to the double-acting cylinder(s) is required. If a change of flow, or pressure, is determined to be required, the method comprises generating a hydraulic liquid control signal 30 to the hydraulic liquid supply system 12 to increase or decrease the flow, or the pressure, of hydraulic liquid supplied to the double-acting hydraulic cylinder(s) 10, 11, such that the movement speed of the movable arm 6 is essentially the same before and after the switch of state operation.

In a further embodiment, the method comprises, during regenerative state operation, evaluating the available hydraulic liquid flow that may be supplied from the hydraulic liquid supply system 12, and releasing hydraulic liquid flow to other hydraulic actuators of the working equipment 4 in dependence of the result of the evaluation.

According to still another embodiment, the method comprises, during one movement procedure of the moveable arm 6, performing numerous switches between regenerative and non-regenerative state operation.

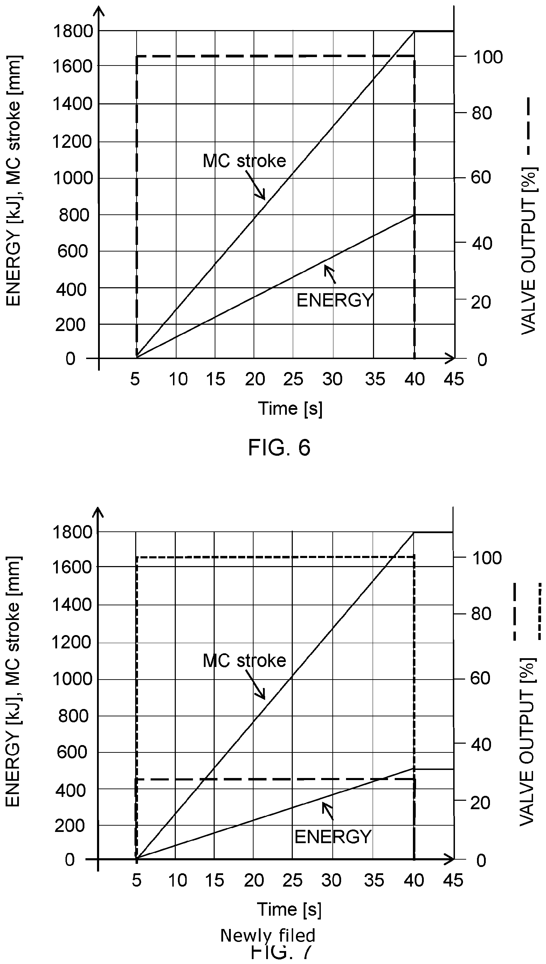

Figures 6 and 7 are graphs shown to illustrate the benefits of using the regenerative function as disclosed herein.

Figure 6 shows a graph where no regenerative function is applied, and figure 6 shows a graph illustrating one exemplary application of the regenerative function as disclosed herein. The values shown are approximated, and the intention of showing the graphs is to illustrate the principle of applying the regenerative function as disclosed herein.

In the graphs, the energy in kJ, and the double-acting hydraulic cylinder (main cylinder, MC) stroke length in mm, are shown at the left vertical axis, and the valve output in % is shown at the right vertical axis. Time in seconds is shown at the horizontal axis. The "valve output" is the output of a valve, or many valves, controlling the flow of hydraulic liquid to the double-acting hydraulic cylinder 10, and, when a regenerative function is applied as shown in figure 7, the throughput of the regenerative valve member 26.

In figure 6, the valve controlling the hydraulic flow to the main cylinder is fully opened after 5 seconds and remains open until 40 seconds have lapsed and is then closed. This is illustrated by the dashed lines (long lines). During the time the valve is open, the piston of the main cylinder moves, as shown in the graph, from 0 to 1800 mm when fully extended. The used energy is in this case 800 kJ when fully extended. No regenerative function is applied in the example illustrated in figure 5.

In figure 7 the regenerative valve member is fully opened between 5 and 40 seconds. This is illustrated by the dashed lines (short lines). The valve controlling the hydraulic liquid flow to the main cylinder is partially open - approximately 25% open - which is illustrated by dashed lines (long lines). The piston of the main cylinder moves as shown in the graph, from 0 to 1800 mm when fully extended, i.e. the same extension speed as in figure 6. However, the used energy is in this case only approximately 520 kJ when fully extended which is considerably lower than in the example shown in figure 6, which is one advantageous result of applying the working equipment provided with the hydraulic arrangement as defined by the independent claims.

The present invention is not limited to the above-described preferred embodiments. Various alternatives, and modifications may be used. Therefore, the above embodiments should not be taken as limiting the scope of the invention, which is defined by the appending claims.

## Claims

1. A hydraulic arrangement (2) for a working equipment (4) with a movable arm (6) for loading and unloading an object (8), the arrangement (2) comprising:
- a double-acting hydraulic cylinder (10) having a first and a second chamber separated by a piston attached to a rod arranged to actuate a movement of the movable arm (6) to load and/or unload the object (8) with the working equipment (4);
- a hydraulic liquid supply system (12) configured to provide the flow of hydraulic liquid to and from the double-acting cylinder (10) supplied from a reservoir (14) of hydraulic liquid by a hydraulic pump (16);
- a control unit (18) configured to control the movements of the movable arm (6) by generating control signals (20) in response to received operation commands (22), and
- a regenerative hydraulic circuit (24) arranged to hydraulically connect, by controlling, by said control unit (18), a regenerative valve member (26), the first chamber with the second chamber, thereby operating said double-acting hydraulic cylinder (10) in a regenerative state, and hydraulically separate the first chamber from the second chamber, thereby operating said double-acting hydraulic cylinder (10) in a non-regenerative state, c h a r act e r i zed in that the hydraulic arrangement (2) further comprises a sensor system (28) configured to sense and provide sensor values (29) applicable to determine whether said double-acting hydraulic cylinder (10) can be operated in a regenerative state, wherein said control unit (18) is configured to operate the double-acting hydraulic cylinder (10) in the regenerative state provided that the determined sensor values (29) indicate that requirements for regenerative state operation are fulfilled, and if any of said requirements not are fulfilled, the control unit (18) is configured to operate the double-acting hydraulic cylinder (10) in the non-regenerative state.

2. A hydraulic arrangement (2) for a working equipment (4) with a movable arm (6) for loading and unloading an object (8), the arrangement (2) comprising:
- two double-acting hydraulic cylinders (10, 11), a first double-acting hydraulic cylinder (10) and a second double-acting hydraulic cylinder (11), each having a first and a second chamber separated by a piston attached to a rod, wherein said rods from said two cylinders (10, 11) are arranged to actuate a movement of the movable arm (6) to load and/or unload the object (8) with the working equipment (4);
- a hydraulic liquid supply system (12) configured to provide the flow of hydraulic liquid to and from the double-acting cylinders (10, 11) supplied from a reservoir (14) of hydraulic liquid by a hydraulic pump (16);
- a control unit (18) configured to control the movements of the movable arm (6) by generating control signals (20) in response to received operation commands (22), and
- a regenerative hydraulic circuit (24) arranged to hydraulically connect, by controlling, by said control unit (18), a regenerative valve member (26), the first chamber with the second chamber of the first hydraulic cylinder (10), or the first or the second chamber of the first hydraulic cylinder (10) with the second or first chamber, respectively, of the second double-acting hydraulic cylinder (11), thereby operating said double-acting hydraulic cylinders (10, 11) in a regenerative state, and to hydraulically separate said chambers, thereby operating said double-acting hydraulic cylinder (10) in a non-regenerative state, **characterized in that** the hydraulic arrangement (2) further comprises a sensor system (28) configured to sense and provide sensor values (29) applicable to determine whether said double-acting hydraulic cylinders (10, 11) can be operated in a regenerative state, wherein said control unit (18) is configured to operate the double-acting hydraulic cylinders (10, 11) in the regenerative state provided that the determined sensor values (29) indicate that requirements for regenerative state operation are fulfilled, and if any of said requirements not are fulfilled, the control unit (18) is configured to operate the double-acting hydraulic cylinders (10, 11) in the non-regenerative state.

3. The hydraulic arrangement (2) according to claim 1 or 2, wherein when the control unit (18) is about to switch between regenerative state operation and non-regenerative state operation, and vice versa, the control unit (18) is configured to determine if a change of flow, or pressure, of hydraulic liquid to be supplied to the double-acting cylinder(s) is required, and if a change of flow, or pressure, is determined to be required, to generate a hydraulic liquid control signal (30) to said hydraulic liquid supply system (12) to increase or decrease the flow, or the pressure, of hydraulic liquid supplied to the one or two double-acting hydraulic cylinder(s) (10, 11), such that the movement speed of the movable arm (6) is essentially the same before and after the switch of state operation.

4. The hydraulic arrangement (2) according to any of claims 1-3, wherein the control unit (18) is configured to generate, in response to received operation commands, a first control signal (32) to control the hydraulic liquid supply system (12) and a second control signal (34) to control the regenerative valve member (26).

5. The hydraulic arrangement (2) according to any of claims 1-4, wherein, provided that said one or two double-acting hydraulic cylinder(s) (10, 11) is/are operated in a regenerative state and the regenerative valve member (26) is fully open, the control unit (18) is configured to perform a continuous speed increase/decrease control of the movement of the movable arm (6) over the entire speed range of the movable arm (6) by a first control signal (32) applied to the hydraulic liquid supply system (12).

6. The hydraulic arrangement (2) according to any of claims 1-5, wherein, during regenerative state operation, the control unit (18) is configured to evaluate the available hydraulic liquid flow that may be supplied from the hydraulic liquid supply system (12), and to release hydraulic liquid flow to other hydraulic actuators of the working equipment (4) in dependence of the result of the evaluation.

7. The hydraulic arrangement (2) according to any of claims 1-6, wherein said control unit (18) is provided with a set of rules for the decision-making regarding switching between regenerative and non-regenerative state operation.

8. The hydraulic arrangement (2) according to any of claims 1-7, wherein during one movement procedure of the moveable arm (6), the control unit (18) is configured to perform numerous switches between regenerative and non-regenerative state operation.

9. The hydraulic arrangement (2) according to any of claims 1-8, wherein said sensor system (28) comprises one or many of a pressure sensor arranged at the hydraulic cylinder, an angle sensor arranged at the moveable arm (6), a proximity switch arranged at the moveable arm, a timer arranged to monitor the time consumed during a movement with the moveable arm (6).

10. The hydraulic arrangement (2) according to any of claims 1-9, wherein said regenerative valve member (26) is an on-off valve.

11. A working equipment (4), preferably mounted on a vehicle, comprising at least one hydraulic arrangement (2) according to any of claims 1-10.

12. A method of using a hydraulic arrangement according to any of claims 1-10, **characterized in that** said method comprises:
- providing sensor values (29), obtained and sensed by a sensor system (28), applicable to determine whether said one or two double-acting hydraulic cylinder(s) (10, 11) can be operated in a regenerative state;
- operating the one or two double-acting hydraulic cylinder(s) (10, 11) in the regenerative state provided that the determined sensor values indicate that requirements for regenerative state operation are fulfilled, and
- operating the double-acting hydraulic cylinder(s) (10, 11) in the non-regenerative state, if any of said requirements not are fulfilled.

13. The method according to claim 12, wherein when the control unit (18) is about to switch between regenerative state operation and non-regenerative state operation, and vice versa, the method comprises:
- determining if a change of flow, or pressure, of hydraulic liquid to be supplied to the double-acting cylinder(s) is required, and if a change of flow, or pressure, is determined to be required, generating a hydraulic liquid control signal (30) to said hydraulic liquid supply system (12) to increase or decrease the flow, or the pressure, of hydraulic liquid supplied to the one or two double-acting hydraulic cylinder(s) (10, 11), such that the movement speed of the movable arm (6) is essentially the same before and after the switch of state operation.

14. The method according to claim 12 or 13, comprising, during regenerative state operation, evaluating the available hydraulic liquid flow that may be supplied from the hydraulic liquid supply system (12), and releasing hydraulic liquid flow to other hydraulic actuators of the working equipment (4) in dependence of the result of the evaluation.

15. The method according to any of claims 12-14, comprising, during one movement procedure of the moveable arm (6), performing numerous switches between regenerative and non-regenerative state operation.
